# EUROPEAN PATENT APPLICATION

(11) **EP 3 836 275 A1**
(43) Date of publication of application: **16.06.2021**
(21) Application number: 20210699.3
(22) Date of filing: 30.11.2020
(51) Int. Cl.: H01M 10/0562, C01G 25/00, C01G 33/00, C01G 35/00, H01M 10/0525

(54) **GARNET-TYPE SOLID ELECTROLYTE SEPARATOR AND METHOD OF PRODUCING THE SAME**

(30) Priority: 10.12.2019 JP 2019223210; 24.03.2020 JP 2020053382
(71) Applicant: Toyota Jidosha Kabushiki Kaisha, Aichi-ken, 471-8571 (JP)
(72) Inventor: WATANABE, Masaki, Toyota-shi, Aichi-ken,, 471-8571 (JP); OHTA, Shingo, Nagakute-shi, Aichi-ken,, 480-1192 (JP)
(74) Representative: Kuhnen & Wacker Patent- und Rechtsanwaltsbüro PartG mbB

(57) **Abstract**

Provided is a garnet-type solid electrolyte separator of strong short circuit suppression, and a method of producing the same. The garnet-type solid electrolyte separator includes: a garnet-type solid electrolyte; a carbon-enriched layer present on at least one surface of the garnet-type solid electrolyte separator; and a carbon-enriched part present in a portion defined by the surface and a depth of 10 µm.

## Description

### FIELD

The present application relates to a garnet-type solid electrolyte separator, and a method of producing the same.

### BACKGROUND

It has been conventionally weighed to use a garnet-type solid electrolyte in an all-solid-state lithium ion battery as a material of a separator.

Patent Literature 1 discloses an oxide all-solid-state battery including a garnet-type oxide solid electrolyte sintered body as a separator.

Patent Literature 2 discloses a technique of coating, with a thin lithium carbonate layer, a surface of a solid electrolyte substrate containing a garnet-type solid electrolyte to suppress short circuits. Specifically, the following are described: the crystal grain size of the solid electrolyte is at most 10 µm, which reduces the irregularities of the surface of the solid electrolyte to improve a specific surface area, and thus short circuits due to an ununiform distance between the terminals are suppressed and the interface resistance can be reduced; the reduced interface resistance can suppress short circuits due to local current concentration; in addition, the lithium carbonate layer having a thickness of 100 nm or less is formed on the solid electrolyte substrate, thereby holes in and scratches on the solid electrolyte substrate can be filled, to suppress short circuits more.

### CITATION LIST

### Patent Literature

Patent Literature 1: JP 2018-142432 A
Patent Literature 2: JP 2017-199539 A

### SUMMARY

### Technical Problem

As described in Patent Literature 2, short circuits are surely suppressed by coating a surface of a solid electrolyte layer with a lithium carbonate layer. This is limitedly effective though. Short circuits cannot be fully suppressed under conditions where a current having a current density as high as at least 4 mA/cm² is passed for at least several minutes to repeat dissolution and precipitation of lithium metal. Thus, there is still much room for improvement in short circuit suppression in the invention described in Patent Literature 2.

With the foregoing actual circumstances in view, an object of the present application is to provide a garnet-type solid electrolyte separator of strong short circuit suppression, and a method of producing the same.

### Solution to Problem

As a result of their intensive research concerning the foregoing problem, the inventors of the present application found out that a carbon-enriched layer is provided with a surface of a garnet-type solid electrolyte sintered body, and further a carbon-enriched part is provided with the inside of the sintered body in the vicinity of the surface, which further improve short circuit suppression. Based on the findings, the present application discloses the following means for solving the foregoing problem.

That is, as one means for solving the foregoing problem, the present application discloses a garnet-type solid electrolyte separator comprising: a garnet-type solid electrolyte; a carbon-enriched layer present on at least one surface of the garnet-type solid electrolyte separator; and a carbon-enriched part present in a portion defined by the surface and a depth of 10 µm.

In the garnet-type solid electrolyte separator, the garnet-type solid electrolyte is preferably (Li_{7-3Y-Z}, Al_{Y})(La₃)(Zr_{2-Z}, M_{Z})O₁₂ where M is at least one element selected from the group consisting of Nb and Ta, and Y and Z are any numbers within ranges of 0 ≤ Y < 0.22 and 0 ≤ Z ≤ 2 respectively. There is preferably a peak of Li₂CO₃ in an XPS spectrum of the surface of the garnet-type solid electrolyte separator. In the composition of the surface calculated by EDX, the carbon concentration is preferably at least 6.8 mass%. Or, in the composition of the surface calculated by EDX, the ratio of carbon/oxygen is preferably at least 0.17, and the ratio of carbon/zirconium is preferably at least 0.23, on the mass basis. Further, in the composition of a fractured face when the garnet-type solid electrolyte separator is fractured in a thickness direction so that the carbon-enriched part is exposed, the composition being calculated by EDX, the average carbon concentration of an area defined by the surface and a depth of 10 µm is preferably at least 10 mass%. The average carbon concentration is more preferably at least 20 mass%.

As one means for solving the foregoing problem, the present application discloses a method of producing a garnet-type solid electrolyte separator, the method comprising: a solvent touching step of touching a solvent containing an oxygen element with a surface of a garnet-type solid electrolyte sintered body; and a heating step of, after the solvent touching step, heating the surface at a temperature not lower than a temperature at which a carbon-enriched layer is formed.

In the method of producing a garnet-type solid electrolyte separator, the solvent is preferably an alcohol. In the heating step, the surface is preferably heated at a temperature of at least 450°C and lower than 700°C.

### Advantageous Effects

According to the present disclosure, a garnet-type solid electrolyte separator of excellent short circuit suppression which has a higher critical current density than conventional arts can be provided. A method of producing this garnet-type solid electrolyte separator can be also provided.

### BRIEF DESCRIPTION OF DRAWINGS

Fig. 1 is a schematic view focusing a fractured face of a separator in the vicinity of a surface of the separator;
Fig. 2 is a flowchart of a production method 10;
Figs. 3A to 3E explanatorily show a putative mechanism of carbon enrichment;
Fig. 4 shows XPS spectra (O-1s) corresponding to Example 1 and Comparative Examples 1 and 2;
Fig. 5 shows XPS spectra (C-1s) corresponding to Example 1 and Comparative Examples 1 and 2;
Fig. 6 shows a SEM image of a fractured face of a separator according to Comparative Example 1;
Fig. 7 shows a SEM image of a fractured face of a separator according to Comparative Example 2;
Fig. 8 shows a SEM image of a fractured face of a separator according to Example 1;
Fig. 9 shows the results of the average carbon concentrations of the fractured face of the separator according to Comparative Example 1 calculated by SEM-EDX;
Fig. 10 shows the results of the average carbon concentrations of the fractured face of the separator according to Comparative Example 2 calculated by SEM-EDX;
Fig. 11 shows the results of the average carbon concentrations of a fractured face of a separator according to Comparative Example 3 calculated by SEM-EDX;
Fig. 12 shows the results of the average carbon concentrations of the fractured face of the separator according to Example 1 calculated by SEM-EDX; and
Fig. 13 shows the results of the average carbon concentrations of a fractured face of a separator according to Example 2 calculated by SEM-EDX.

### DESCRIPTION OF EMBODIMENTS

In the present description, expression "A to B" concerning numeral values A and B shall mean "at least A and at most B". In such expression, if a unit is added only to the numeral value B, this unit shall be applied to the numeral value A as well.

### [Garnet-type solid electrolyte separator]

A garnet-type solid electrolyte separator of the present disclosure has a feature of including a garnet-type solid electrolyte, a carbon-enriched layer present on at least one surface of the garnet-type solid electrolyte separator, and a carbon-enriched part present in a portion defined by the surface and a depth of 10 µm.

The garnet-type solid electrolyte separator of the present disclosure has the foregoing feature, which leads to a higher critical current density thereof than the conventional, and brings about excellent short circuit suppression.

Hereinafter structures will be each described.

(Garnet-type solid electrolyte)

In the present disclosure, the garnet-type solid electrolyte is a solid electrolyte having a garnet crystal structure which has Li ion conductivity, contains at least Li, and is represented by chemical composition of LiₓA₃B₂O₁₂. Here, when the valence of A is a and the valence of B is b, X satisfies the relation of X = 24 - 3a -2b. Examples of such a garnet-type solid electrolyte include (Li_{7-3Y-Z}, Al_{Y})(La₃)(Zr_{2-Z}, M_{Z})O₁₂ where M is at least one element selected from the group consisting of Nb and Ta, Y and Z are any numbers within the ranges of 0 ≤ Y < 0.22 and 0 ≤ Z ≤ 2 respectively, which is referred to as LLZ. LLZ of any known composition can be employed. An example of typical composition thereof is Li₇La₃Zr₂O₁₂.

The content of the garnet-type solid electrolyte is preferably at least 50 mass%, more preferably at least 80 mass%, and further preferably at least 90 mass%, when the amount of the garnet-type solid electrolyte separator is defined as 100 mass%. The content of the garnet-type solid electrolyte lower than 50 mass% may lower lithium ion conductivity. The upper limit of the content of the garnet-type solid electrolyte is not particularly limited, but may be at most 99 mass%.

### (Carbon-enriched layer)

The garnet-type solid electrolyte separator of the present disclosure includes the carbon-enriched layer on at least one surface thereof. "Carbon-enriched layer" represents an area of a higher carbon element concentration than the other parts, present like a layer. The carbon-enriched layer may be provided with each of both surfaces of the garnet-type solid electrolyte separator. Here, "surface" means a face in contact with or facing a cathode layer or an anode layer when the garnet-type solid electrolyte separator is used in a lithium ion battery.

Preferably, the carbon-enriched layer is mainly composed of Li₂CO₃ (lithium carbonate). "Mainly composed of' means that the content of Li₂CO₃ in the carbon-enriched layer is at least 50 mass%, which is preferably at least 80 mass%, and more preferably at least 90 mass%. The upper limit of the content of Li₂CO₃ is not particularly limited. The carbon-enriched layer may be entirely composed of Li₂CO₃.

The garnet-type solid electrolyte separator includes the carbon-enriched layer on the surface(s), which can improve short circuit suppression because coating, with the carbon-enriched layer, defects present in the surface(s) of the solid electrolyte sintered body such as microcracks is believed to make it possible to suppress participation of lithium starting from these defects, and development thereof.

The thickness of the carbon-enriched layer is not particularly limited, but is preferably a thickness with which the foregoing effect is fully brought about. This can be determined from XPS (X-ray photoelectron spectroscopy) and/or EDX (energy-dispersive X-ray spectroscopy) analysis as follows.

When the surface having the carbon-enriched layer is analyzed by XPS, the peaks of Li₂CO₃ are preferably present in XPS spectra because the presence of the peaks of Li₂CO₃ confirmable in XPS spectra represents that the carbon-enriched layer has such a thickness that the peaks can be confirmed. The presence of the peaks of Li₂CO₃ confirmable in XPS spectra makes it possible to determine that the thickness of the carbon-enriched layer is enough for the foregoing effect to be brought about. For example, the peaks of Li₂CO₃ are present around 531.5±0.3 eV in the O1s spectrum of XPS, and around 289.6±0.5 eV in the C1s spectrum of XPS.

When the surface having the carbon-enriched layer is analyzed by EDX, the carbon concentration in the composition of the surface, which is calculated by EDX, is preferably at least 6.8 mass%, and more preferably at least 7.3 mass%. The carbon concentration in the composition of the surface of at least 6.8 mass% makes it possible to determine that the thickness of the carbon-enriched layer is enough for the foregoing effect to be brought about. The upper limit of the carbon concentration in the composition of the surface is not particularly limited, but the carbon concentration therein is preferably less than 15.5 mass%, and more preferably at most 9.4 mass%. The carbon concentration in the composition of the surface of at least 15.5 mass% leads to too thick a carbon-enriched layer, which may increase the interface resistance of the garnet-type solid electrolyte separator.

Here, measurement conditions for EDX may affect the analysis thereof. Thus, values standardized as follows may be used. That is, in the composition of the surface to be calculated by EDX, the mass ratio of carbon/oxygen is preferably at least 0.17, and the mass ratio of carbon/zirconium is preferably at least 0.23. The upper limits of the mass ratios are not particularly limited, but the mass ratio of carbon/oxygen is preferably less than 0.24, and more preferably at most 0.19; and the mass ratio of carbon/zirconium is preferably less than 1.2, and more preferably at most 0.37.

For EDX, SEM-EDX utilizing a SEM (scanning electron microscope) together can be used.

### (Carbon-enriched part)

The garnet-type solid electrolyte separator of the present disclosure includes the carbon-enriched part present in a portion defined by the surface (surface on the side where the carbon-enriched layer is formed) and a depth of 10 µm.

"Defined by the surface and a depth of 10 µm " defines a portion of the garnet-type solid electrolyte separator in the thickness direction, and defines a portion of the garnet-type solid electrolyte separator in the stacking direction when the garnet-type solid electrolyte separator is used in a battery. The portion in the thickness direction is, as described above, the portion defined by the surface and the depth of 10 µm.
"Carbon-enriched part" is a part of a higher carbon element concentration than the other parts, and preferably, is mainly composed of Li₂CO₃. The presence or not of the carbon-enriched part can be identified by a SEM image etc. The carbon-enriched part is formed around a defect (gap between solid electrolytes etc.) in the vicinity of the surface of the garnet-type solid electrolyte separator (portion defined by the surface and the depth of 10 µm). Since the solid electrolyte sintered body, which is a raw material, usually has such defects a lot, the vicinity of the surface is dotted with a lot of the carbon-enriched parts in the present disclosure.

The garnet-type solid electrolyte separator of the present disclosure has the carbon-enriched part in the portion defined by the surface and the depth of 10 µm, which can improve the critical current density, to improve short circuit suppression because formation of the carbon-enriched part around a defect from which participation of lithium and development thereof start is believed to lead to suppression of development of lithium dendrites.

Here, as described above, the vicinity of the surface of the garnet-type solid electrolyte separator is dotted with a lot of the carbon-enriched parts. It can be identified by a SEM image etc. that the vicinity of the surface of the garnet-type solid electrolyte separator is dotted with a lot of the carbon-enriched parts, but it is difficult to quantify this. Thus, in the present application, the degree of the distribution of the carbon-enriched parts is quantified from the average carbon concentration calculated by EDX. For example, SEM-EDX can be used as EDX.

Specifically, the quantification is carried out as follows. First, the garnet-type solid electrolyte separator is fractured in the thickness direction so that the carbon-enriched part is exposed. Generally, part of a higher impurity concentration tends to break priorly in ceramics. The garnet-type solid electrolyte separator can be fractured so that the carbon-enriched part is exposed by an usual fracturing method since the carbon-enriched part corresponds to impurities. Examples of the fracturing method include a method of removing Li present on the surface of the separator by, for example, a method of immersing the surface in ethanol, and thereafter giving the surface a streak with, for example, a diamond pen, and cleaving the separator along the streak.

The use of such a fracturing method may bring about difference in the carbon concentration between the surface and the fractured face in the vicinity of the surface since the separator is fractured so that the carbon-enriched part is exposed. Thus, the carbon concentration of the fractured face in the vicinity of the surface tends to be higher than that of the surface.

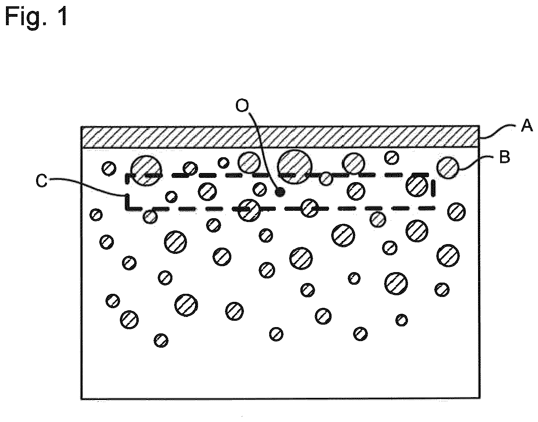

Next, the fractured face is analyzed by EDX. Fig. 1 shows a schematic view focusing the fractured face in the vicinity of the surface. On the sheet of Fig. 1, the vertical direction is a thickness direction, and the lateral direction is a direction orthogonal to the thickness direction. A is the carbon-enriched layer, and B is the carbon-enriched part. The area C shown by dotted lines is a measurement area of the face analysis. O is the center point of the measurement area. The center point is a point of intersection of lines that perpendicularly divide the lengths in the thickness direction and in the direction orthogonal to the thickness direction respectively into two equal lengths in the measurement area.

The face analysis is performed while the center point is included in an area defined by the surface and the depth of 10 µm.The measurement is carried out so that the proportion of the measurement area to the area defined by the surface and the depth of 10 µm is at least 60% in the thickness direction because it is difficult to perform the face analysis only on the area defined by the surface and the depth of 10 µm. In view of improvement in accuracy, the measurement is carried out so that the proportion of the measurement area is preferably at least 70%, more preferably at least 80%, and further preferably at least 90%. Here, the face analysis may be performed on two or more areas for the area defined by the surface and the depth of 10 µm. In this case, the foregoing proportion is calculated from the total of the measurement areas in the thickness direction. The range of the face analysis in the thickness direction is 5 to 10 µm.The range of the face analysis in the direction orthogonal to the thickness direction is not particularly limited, but for example, 25 to 30 µm.

For example, ranges of 8.7±5 µm in the thickness direction of the fractured face, and 25 µm in the direction orthogonal to the thickness direction are set, to perform such face analysis. In this case, it is set to analyze 63% of the area defined by the surface and the depth of 10 µm in the thickness direction.

The fractured face is analyzed using EDX so that the foregoing measurement conditions are satisfied, which makes it possible to calculate the average carbon concentration of the area defined by the surface and the depth of 10 µm. When the face analysis is performed on two or more areas for the area defined by the surface and the depth of 10 µm, the mean value of the obtained results is defined as the average carbon concentration of the area defined by the surface and the depth of 10 µm. Here, "average carbon concentration" in the present description means the mass fraction of carbon to the total of carbon, zirconium and oxygen (carbon/(carbon + zirconium + oxygen) on the basis of the mass ratio) calculated by EDX.

The following circumstances may be considered to calculate the average carbon concentration. As described later, in a method of producing the garnet-type solid electrolyte separator of the present disclosure, a solvent that is a material to form the carbon-enriched layer or the like is touched with the garnet-type solid electrolyte sintered body. When the garnet-type solid electrolyte separator is produced in such a manner, the average carbon concentration tends to be lower at a position further from the surface and closer to the inside. Such a tendency can be identified by the face analysis on plural areas on the fractured face of the garnet-type solid electrolyte separator. Thus, when a specific tendency can be seen concerning the average carbon concentration of the fractured face, the average carbon concentration may be calculated in view of this. For example, the average carbon concentration of the area defined by the surface and the depth of 10 µm may be calculated supposing that the value of the average carbon concentration measured while at least 60% of the area defined by the surface and the depth of 10 µm is included, and the value of the average carbon concentration measured while a value of the depth is suitably set in 10 µm or more (the closer to 10 µm the value suitably set is, the better) are in proportion to each other.

The average carbon concentration of the area defined by the surface and the depth of 10 µm can be calculated as described above. A preferred average carbon concentration is as follows: in the composition of the fractured face calculated by EDX, the average carbon concentration of the area defined by the surface and the depth of 10 µm is preferably at least 10 mass%. The average carbon concentration of 10 mass% or more can improve the critical current density of the separator, to improve short circuit suppression. The average carbon concentration is more preferably at least 20 mass%. The upper limit of the average carbon concentration is not particularly limited, but the average carbon concentration may be at most 40 mass%. The average carbon concentration higher than 40 mass% shows that a lot of the carbon-enriched parts are formed inside the separator in the vicinity of the surface. Formation of a lot of the carbon-enriched parts as described above causes a problem of lowered strength of the garnet-type solid electrolyte separator to cause cracks etc.

The average carbon concentration of the area defined by the surface and the depth of 10 µm is preferably at least twice as high as the average carbon concentration of an area defined by the surface and a depth of more than 10 µm. In this case, the vicinity of the surface is dotted with more carbon-enriched parts than the inside, which improves short circuit suppression. Here, the average carbon concentration of the area defined by the surface and a depth of more than 10 µm is the average carbon concentration when the face analysis is performed while the center point is included in the area defined by the surface and a depth of more than 10 µm, and is the mean value of the obtained average carbon concentrations when the face analyze is performed on two or more areas. When the average carbon concentration of the area defined by the surface and a depth of more than 10 µm is calculated, the face analysis is performed while the center point of the measurement area is included in the range of more than 10 µm and at most 50 µm in depth.

### (Garnet-type solid electrolyte separator)

The garnet-type solid electrolyte separator of the present disclosure has been described. As described above, the garnet-type solid electrolyte separator of the present disclosure has the carbon-enriched layer on its surface(s), and further the carbon-enriched part present inside in the vicinity of the surface. This can synergistically improve the critical current density, and thus excellent short circuit suppression can be shown.

The garnet-type solid electrolyte separator of the present disclosure can be used as a separator for all-solid-state batteries, and for example, can be preferably used as a separator for all-solid-state lithium ion batteries.

### [Method of producing garnet-type solid electrolyte separator]

Next, the method of producing the garnet-type solid electrolyte separator will be described. The method of producing the garnet-type solid electrolyte separator is not particularly limited, but in the present application, the following production method will be disclosed.

That is, disclosed is the method of producing the garnet-type solid electrolyte separator, the method including: a solvent touching step of touching a solvent containing an oxygen element with the surface of the garnet-type solid electrolyte sintered body; and a heating step of, after the solvent touching step, heating the surface at a temperature not lower than a temperature at which the carbon-enriched layer is formed.

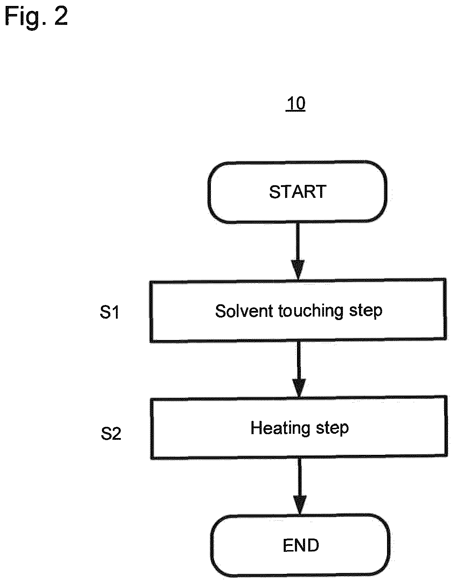

Hereinafter the method of producing the garnet-type solid electrolyte separator of the present disclosure will be described using a method 10 of producing the garnet-type solid electrolyte separator (hereinafter may be referred to as "production method 10") which is one embodiment. Fig. 2 is a flowchart of the production method 10.

As shown in Fig. 2, the production method 10 includes a solvent touching step S1 and a heating step S2.

### (Solvent touching step S1)

The solvent touching step S1 is a step of touching the solvent containing an oxygen element with the surface of the garnet-type solid electrolyte sintered body. The surface of the garnet-type solid electrolyte sintered body is touched with the solvent containing an oxygen element, which makes it possible to make the garnet-type solid electrolyte react with the solvent in the heating step S2 described later, to precipitate Li₂CO₃. Li₂CO₃ precipitated on the surface becomes the carbon-enriched layer. Li₂CO₃ precipitated inside in the vicinity of the surface becomes the carbon-enriched part.

The garnet-type solid electrolyte sintered body is a sintered body mainly containing the garnet-type solid electrolyte. Specifically, the garnet-type solid electrolyte sintered body contains the garnet-type solid electrolyte in an amount of at least 50 mass%, which is preferably at least 80 mass%, and more preferably at least 90 mass%. The upper limit of the content of the garnet-type solid electrolyte is not particularly limited. The garnet-type solid electrolyte sintered body may be formed of the garnet-type solid electrolyte only. Such a garnet-type solid electrolyte sintered body can be made according to a known method such as a method of sintering a sintered body material containing the garnet-type solid electrolyte at 400°C to 500°C in an argon atmosphere.

The solvent containing an oxygen element is not particularly limited as long as containing an oxygen element, and making it possible to precipitate Li₂CO₃ in the heating step S2 described later. Examples thereof include polar solvents such as water, and solvents containing an oxygen element in each of which a material containing a carbon element such as an alcohol and wax is dissolved (such as ketones (including acetone and methyl ethyl ketone) and ethers (including diethyl ether and dibutyl ether)). In view of permeability of the garnet-type solid electrolyte sintered body, the solvent containing an oxygen element is preferably water or an alcohol, and more preferably an alcohol because a Li₂CO₃ generating reaction more gradually progresses when an alcohol is used than when water is used. The use of water may lead to elution of a lithium ion in the garnet-type solid electrolyte sintered body, into the water, and substitution of a hydrogen ion for the lithium ion, which decrease lithium ion conductivity. The alcohol can be methanol, ethanol, propanol, and butanol, and is preferably ethanol.

The method of touching the solvent with the surface of the garnet-type solid electrolyte sintered body is not particularly limited. An example thereof is a method of dropping the solvent using a pipette or the like, to immerse the surface in the solvent. Or, the surface of the garnet-type solid electrolyte sintered body may be immersed in the solvent. The solvent may be touched with at least part of the surface, but is preferably touched with the whole of the surface.

The amount of the solvent touched with the surface of the garnet-type solid electrolyte sintered body is suitably set so that the carbon-enriched layer and the carbon-enriched part are suitably generated in the heating step S2 because a necessary amount thereof may vary according to a type of the solvent.

In the solvent touching step S1, the surface of the garnet-type solid electrolyte sintered body may be polished as the solvent is touched therewith (wet polishing).

This can lead to a smooth surface, and an uniform thickness of the carbon-enriched layer. Sandpaper etc. can be used for the polishing.

### (Heating step S2)

The heating step S2 is carried out after the solvent touching step S1, and is a step of heating the surface at a temperature not lower than a temperature at which the carbon-enriched layer is formed. Since the surface of the garnet-type solid electrolyte sintered body, and defects in the vicinity of the surface (sintering defects, microvoids and microcracks) are immersed in the solvent in the solvent touching step S1, heating the surface in the heating step S2 can lead to formation of the carbon-enriched layer on the surface of the garnet-type solid electrolyte sintered body, and formation of the carbon-enriched part inside the sintered body in the vicinity of the surface.

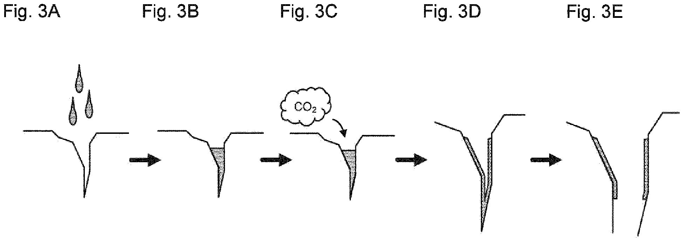

Here, the inventors of the present application presume that the carbon-enriched layer and the carbon-enriched part are formed by the following mechanism of enriching carbon. Figs. 3A to 3E show schematic views when ethanol is used as the solvent.
As described above, defects (such as communication holes) are present in the surface of the garnet-type solid electrolyte sintered body, and inside the sintered body in the vicinity of the surface. Therefore, ethanol touches the defects in the solvent touching step S1 (Fig. 3A), to permeate the defects (Fig. 3B). Also, CO₂ in the air is absorbed into moisture remaining in the ethanol (Fig. 3C). Then, the surface is heated in the heating step S2, which promotes the reaction of the garnet-type solid electrolyte sintered body, water, and CO₂, to generate Li₂CO₃, and thereby carbon is enriched (Fig. 3D). Such a mechanism is believed to lead to formation of the carbon-enriched layer and the carbon-enriched part. As descried above, since a part where carbon is enriched is easy to crack, fracturing in the EDX measurement tends to start from such a part (Fig. 3E).

The heating temperature in the heating step S2 is not particularly limited as long as being not lower than a temperature at which the carbon-enriched layer is formed, but is preferably at least 450°C in view of promotion of the reaction. Too high a reaction rate causes the formed carbon-enriched layer to be too thick, which makes it difficult to form the interface between the separator and an anode when a battery is made, and also causes a lot of irregularities to be formed on the carbon-enriched layer, which is not preferable. Therefore, the heating temperature is preferably lower than 700°C, and more preferably at most 550°C.

The heating time in the heating step S2 is not particularly limited, but is suitably set according to the heating temperature. For example, the heating time is preferably set in 15 minutes to 1 hour.

The heating method in the heating step S2 is not particularly limited, but for example, can be carried out using a hot plate or the like. The heating atmosphere may be the air.

The method including the foregoing steps makes it possible to produce the garnet-type solid electrolyte separator of the present disclosure.

### Examples

Hereinafter the garnet-type solid electrolyte separator of the present disclosure will be further described using Examples.

### [Making garnet-type solid electrolyte separator]

A LLZ sintered body was used for a sintered body that is a base of the garnet-type solid electrolyte separator. The LLZ sintered body was manufactured by Toshima Manufacturing Co., Ltd., and had a shape of a disk of 11.2 mm in diameter and 3 mm in thickness. The composition thereof was Li_{6.6}La₃Zr_{1.6}Ta_{0.4}O₁₂, and the relative density thereof was at least 97%. The surface of this LLZ sintered body was treated as follows, to make garnet-type solid electrolyte separators of Examples 1 to 3 and Comparative Examples 1 to 4.

The separator of Comparative Example 1 was made by polishing the whole of one surface of the LLZ sintered body with P2000 sandpaper in an argon atmosphere.

The separator of Comparative Example 2 was made by polishing the whole of one surface of the LLZ sintered body with P2000 sandpaper in the air, thereafter heating the surface on a hot plate at 450°C for 15 minutes in the air, and thereafter allowing the sintered body to stand to cool.

The separator of Comparative Example 3 was made by polishing the whole of one surface of the LLZ sintered body with P2000 sandpaper as dropping ethanol thereon in the air, thereafter heating the surface on a hot plate at 400°C for 10 minutes in the air, and thereafter allowing the sintered body to stand to cool.

The separator of Example 1 was made by polishing the whole of one surface of the LLZ sintered body with P2000 sandpaper as dropping ethanol thereon in the air, thereafter heating the surface on a hot plate at 450°C for 15 minutes in the air, and thereafter allowing the sintered body to stand to cool.

The separator of Example 2 was made by polishing the whole of one surface of the LLZ sintered body with P2000 sandpaper as dropping ethanol thereon in the air, thereafter heating the surface on a hot plate at 550°C for 1 hour in the air, and thereafter allowing the sintered body to stand to cool.

The separator of Example 3 was made by polishing the whole of one surface of the LLZ sintered body with P2000 sandpaper as dropping water thereon in the air, thereafter heating the surface on a hot plate at 550°C for 1 hour in the air, and thereafter allowing the sintered body to stand to cool.

The separator of Comparative Example 4 was made by polishing the whole of one surface of the LLZ sintered body with P2000 sandpaper as dropping ethanol thereon in the air, thereafter heating the surface on a hot plate at 700°C for 1 hour in the air, and thereafter allowing the sintered body to stand to cool.

### [Evaluation]

### (Measuring critical current density)

Lithium metal foil (50 µm in thickness) was adhered to the face of the separator of each of Examples 1 and 2 and Comparative Examples 1 to 4, which was treated as the foregoing, and copper foil (10 µm in thickness) was adhered to the other face thereof, to make batteries (half cells) for evaluation of Examples 1 and 2 and Comparative Examples 1 to 4.

Next, a load of 200 to 300 kgf was applied to the top and bottom faces of each of the batteries for evaluation, which was made as the foregoing, in the stacking direction using two iron pins of 11.28 mm in diameter, to constrain the batteries, and the constrained batteries were heated to 60°C as connected to an electrochemical evaluation device (charge/discharge evaluation system manufactured by HOKUTO DENKO

### CORPORATION).

Electricity was then conducted to each battery for evaluation in a constant current mode as the current density in the current mode was increasing step by step as ±0.1 mA/cm², ±0.25 mA/cm², ±0.4 mA/cm², ±0.5 mA/cm², ±1m A/cm², ±2 mA/cm², ±4m A/cm², ±8m A/cm², and ± 16m A/cm² in order; the electricity was conducted at each current density for 1 hour, and the voltage then was measured. Short circuiting was determined at the time point when the voltage value suddenly dropped to approximately 0 V, and the critical current density (CCD) at this time point was defined as the current density one step lower than that at the time point of the short circuiting. The results are shown in Table 1. Here, the measurement was carried out four times for each of Example 1 and Comparative Examples 1 and 3, and twice for each of Example 2 and Comparative Example 2. The measurement could not be carried out for Comparative Example 4 because the carbon-enriched layer on the surface of the LLZ sintered body was thick, which made it difficult to form the interface with Li metal.

**Table 1**

| | No. 1 | No. 2 | No. 3 | No. 4 |
|---|---|---|---|---|
| Comparative Example 1 | 2 mA/cm² | 1 mA/cm² | 2 mA/cm² | 1 mA/cm² |
| Comparative Example 2 | 1 mA/cm² | 1 mA/cm² | | |
| Comparative Example 3 | 1 mA/cm² | 1 mA/cm² | 0.5 mA/cm² | 2 mA/cm² |
| Comparative Example 4 | not measurable | | | |
| Example 1 | 4 mA/cm² | 4 mA/cm² | 4 mA/cm² | 8 mA/cm² |
| Example 2 | 1 mA/cm² | 4 mA/cm² | | |

As shown in the results in Table 1, while the critical current density in each of Comparative Examples 1 to 3 was at most 2 mA/cm², the critical current density in Example 1 was at most 8 mA/cm², and the critical current density in Example 2 was at most 4 mA/cm². According to the results, it can be said that Examples 1 and 2 had high critical current densities, and showed excellent short circuit suppression, compared to Comparative Examples 1 to 3.

### (XPS Surface analysis)

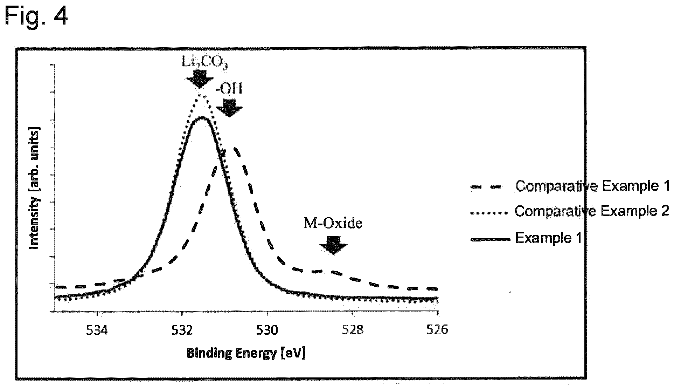

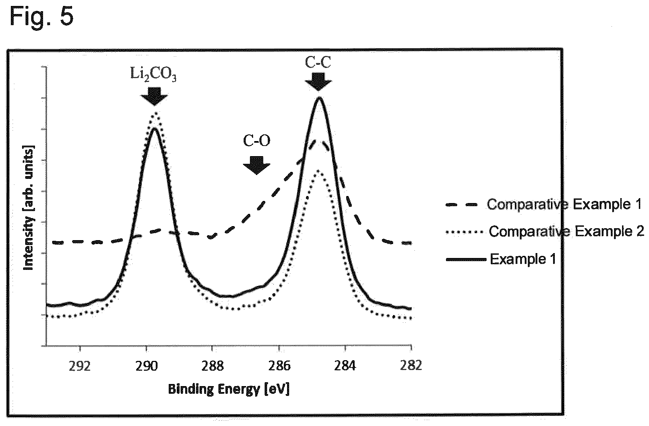

The treated surface of each of the separators of Example 1 and Comparative Examples 1 and 2 was measured by XPS. PHI-5000 VersaProve II manufactured by ULVAC-PHI, Inc. was used for an XPS device. Figs. 4 and 5 show the obtained spectra (O-1s spectra and C-1s spectra).

Seen from Figs. 4 and 5, clear peaks of Li₂CO₃ were observed in the XPS spectra of Example 1 and Comparative Example 2. Thus, it is believed that a layer of Li₂CO₃ (carbon-enriched layer) was present on the surface of the separator of each of Example 1 and Comparative Example 2, and further believed that the carbon-enriched layer had a thickness that is not less than a thickness observable by XPS. In contrast, no peak of Li₂CO₃ was observable in Comparative Example 1.

### (EDX Surface analysis)

The treated surface of each of the separators of Examples 1 to 3 and Comparative Examples 1 to 4 was measured by SEM-EDX, to calculate the composition of the surface (mass%). SU-8000 manufactured by Hitachi High-Tech Corporation was used for SEM. X-max 80 mm² manufactured by HORIBA, Ltd. was used for EDX, and the acceleration voltage was set in 5 kV, to carry out the measurement. Freely selected 3 areas were measured, to calculate the contents of carbon, oxygen and zirconium. Tables 2 and 3 show the results.

Table 2 shows the results of Example 1 and Comparative Examples 1 and 2 in detail. The element comparison was calculated based on the mean value.
Table 3 lists the conditions for the surface treatment, and the results of the composition of the surface so that the conditions and results concerning Examples 1 to 3 and Comparative Examples 1 to 4 can be compared with each other. The carbon concentration, the C/Zr ratio, and the C/O ratio in Table 3 were calculated based on the mean value, as well as in Table 2.

**Table 2**

| | Composition of surface (mass%) | | | | | Element comparison | |
|---|---|---|---|---|---|---|---|
| | | 1 | 2 | 3 | mean | | |
| Comparative Example 1 | C | 2.98 | 2.43 | 2.41 | 2.60 | C/Zr | 0.08 |
| | O | 45.68 | ' 45.56 | 44.71 | 45.32 | C/O | 0.06 |
| | Zr | 33.84 | 34.85 | 32.85 | 33.85 | | |
| Comparative Example 2 | C | 4.57 | 4.27 | 5.31 | 4.72 | C/Zr | 0.14 |
| | O | 46.62 | 45.79 | 46.15 | 46.19 | C/O | 0.10 |
| | Zr | 31.64 | 33.48 | 32.55 | 32.56 | | |
| Example 1 | C | 6.81 | 7.81 | 7.52 | 7.38 | C/Zr | 0.23 |
| | O | 43.29 | 45.10 | 45.18 | 44.52 | C/O | 0.17 |
| | Zr | 33.10 | 31.84 | 31.56 | 32.17 | | |

**Table 3**

| | Solvent | Heating temperature (°C) | Heating time | carbon concentration (mass%) | C/Zr ratio | C/O ratio |
|---|---|---|---|---|---|---|
| Comparative Example 1 | None | - | - | 2.6 | 0.08 | 0.06 |
| Comparative Example 2 | None | 450 | 15 minutes | 4.7 | 0.14 | 0.10 |
| Comparative Example 3 | ethanol | 400 | 10 minutes | 5.4 | 0.16 | 0.12 |
| Example 1 | ethanol | 450 | 15 minutes | 7.4 | 0.23 | 0.17 |
| Example 2 | ethanol | 550 | 1 hour | 9.4 | 0.37 | 0.18 |
| Example 3 | water | 550 | 1 hour | 8.7 | 0.28 | 0.19 |
| Comparative Example 4 | ethanol | 700 | 1 hour | 15.5 | 1.20 | 0.24 |

It is found from Table 2 that the carbon concentration in Comparative Example 2 was higher than the carbon concentration in Comparative Example 1, and the carbon concentration in Example 1 was higher than the carbon concentration in Comparative Example 2. Since the carbon concentration in the composition of the surface is believed to be derived from Li₂CO₃, it is believed that the higher the carbon concentration is, the thicker the carbon-enriched layer is. The same tendency can be read from the standardized ratios of carbon/zirconium and of carbon/oxygen.

From the foregoing, it is believed that the solvent is touched with the surface of the LLZ sintered body, and then the surface is subjected to the heating process, which makes it possible to from a thicker carbon-enriched layer.

Next, the conditions for the surface treatment was studied from the results of Table 3. It could be confirmed from Examples 1 to 3 that both water and an alcohol can be used for the solvent. It could be also confirmed that the heating temperature within the range of 450°C to 550°C causes particularly no problem. In contrast, in Comparative Example 3, the heating process was carried out at 400°C, and the carbon concentration was lower than Examples. Therefore, it is believed that the thickness of the carbon-enriched layer was not sufficient, which led to a low critical current density as in Table 1. In Comparative Example 4, since the heating process was carried out at 700°C, the carbon concentration was higher than Examples. However, the carbon-enriched layer having a lot of irregularities was formed on the surface, and thus the separator of Comparative Example 4 was not suitable for use in the battery.

### (SEM-EDX analysis of fractured face)

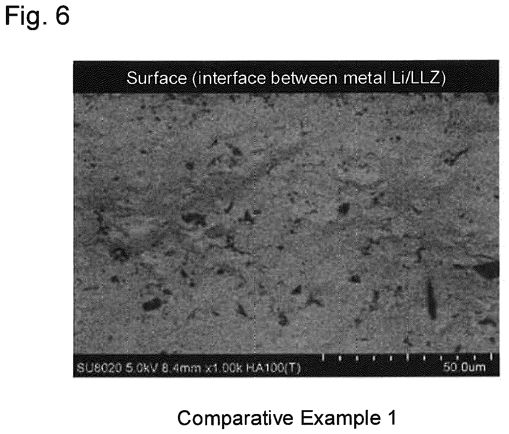

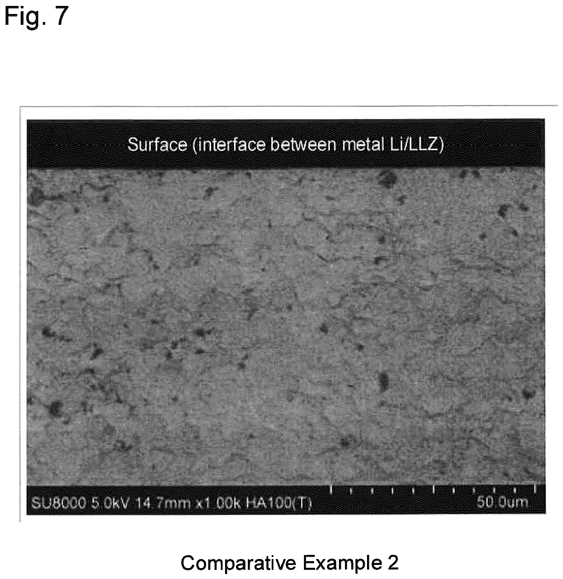

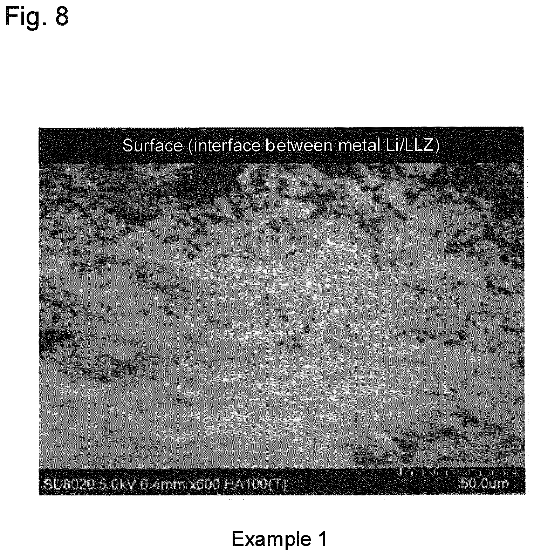

The separator of each of Example 1 and Comparative Examples 1 and 2 was fractured, and a fractured face thereof was analyzed by SEM-EDX. The separator was fractured by a method of giving the surface of the separator a streak using a diamond pen, holding both ends of the separator across the streak with pliers, and applying bending stress to the separator to cleave the separator along the streak. Figs. 6 to 8 show SEM images in the vicinities of the surfaces of the separators (interfaces between Li metal foil/LLZ (separators)) of Example 1 and Comparative Examples 1 and 2. Fig. 6 is a SEM image of Comparative Example 1, Fig. 7 is a SEM image of Comparative Example 2, and Fig. 8 is a SEM image of Example 1.

It could be confirmed from Figs. 6 to 8 that while a black area showing light elements is small in the SEM image of each of Comparative Examples 1 and 2, the black area concentrates on the vicinity of the surface in the SEM image of Example 1. From this, it is believed that some element was enriched in the vicinity of the surface of the separator of Example 1. Since it can be presumed according to the method of making the separator that Li₂CO₃ was also formed inside the separator, the black area is predicted to be an area showing that carbon is enriched. Thus, the carbon concentration of the fractured face of the separator of each of Examples 1 and 2 and Comparative Examples 1 to 3 was calculated using EDX.

In the EDX analysis, the fractured face was divided into several areas, and face analysis was carried out on 2 fields of view thereof, to calculate the average carbon concentration (mass%) in the measurement area. For Comparative Example 1, the face analysis was carried out on the area of 10 µm in the thickness direction of the separator, and 25 µm in the direction orthogonal to the thickness direction. For each of Comparative Examples 2 and 3 and Examples 1 and 2, the face analysis was carried out on the area of 5 µm in thickness direction of the separator, and 25 µm in the direction orthogonal to the thickness direction. The results show the positions of the center points in the analyzed areas in the thickness direction. The average carbon concentrations of the vicinity of the surface (area defined by the surface and a depth of 10 µm), and of the inside (area defined by the surface and a depth of more than 10 µm) were separately calculated. When the areas were each measured twice or more, the mean values thereof were defined as the average carbon concentrations in respective areas.

For Comparative Example 1, the face analysis was carried on areas the positions of the center point of which were each 8.3 µm, 18 µm, 29 µm, 41 µm, 53 µm, and 66 µm away from the surface. For Comparative Example 2, the face analysis was carried on areas the positions of the center point of which were each 3.75 µm, 9.67 µm, 16.1 µm, 22.1 µm, 29.1 µm, 36.1 µm, 42.9 µm, and 49.7 µm away from the surface. For Comparative Example 3, the face analysis was carried on areas the positions of the center point of which were each 2.46 µm, 6.93 µm, 11.7 µm, 16.48 µm, 21.10 µm, 25.48 µm, and 30.12 µm away from the surface. For Example 1, the face analysis was carried on areas the positions of the center point of which were each 2.46 µm, 6.93 µm, 11.7 µm, 16.5 µm, 21.2 µm, 25.5 µm, and 30.1 µm away from the surface. For Example 2, the face analysis was carried on areas the positions of the center point of which were each 2.41 µm, 7.04 µm, 11.9 µm, 16.9 µm, 22.2 µm, 28.0 µm, and 34.4 µm away from the surface.

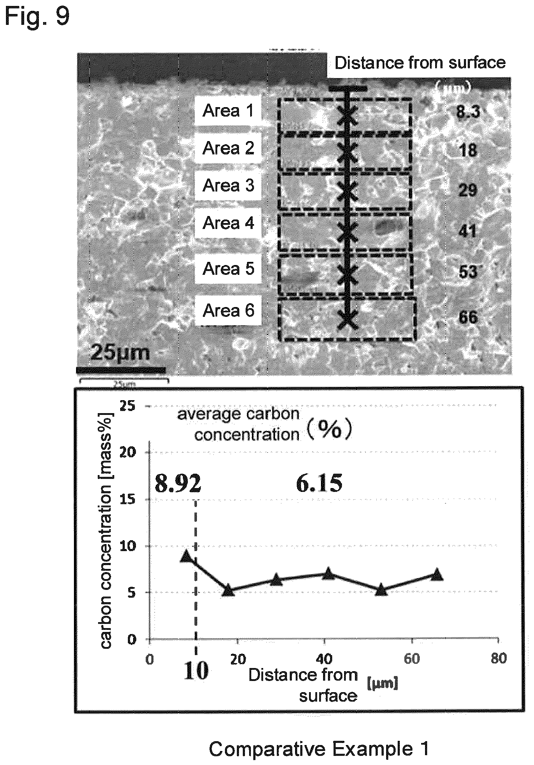

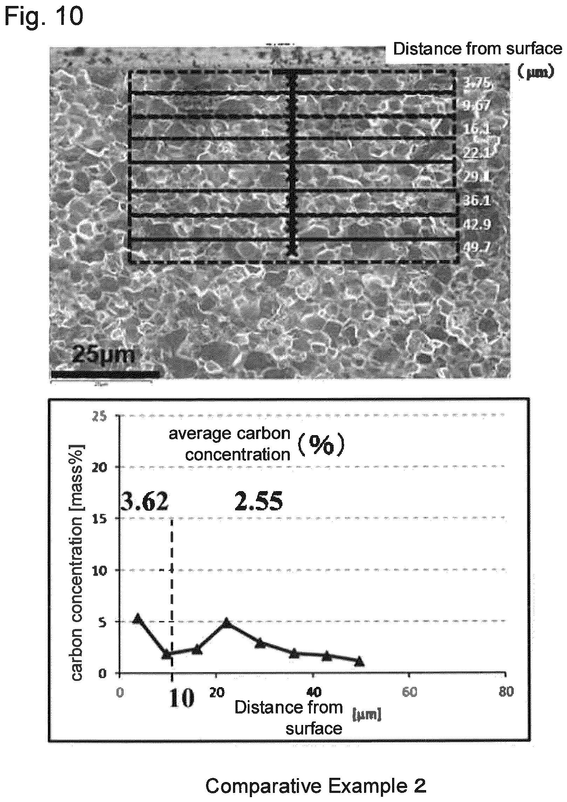

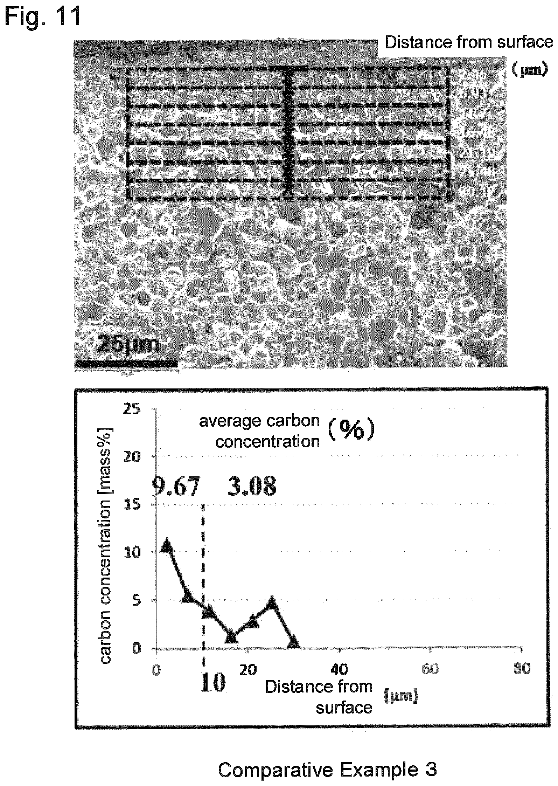

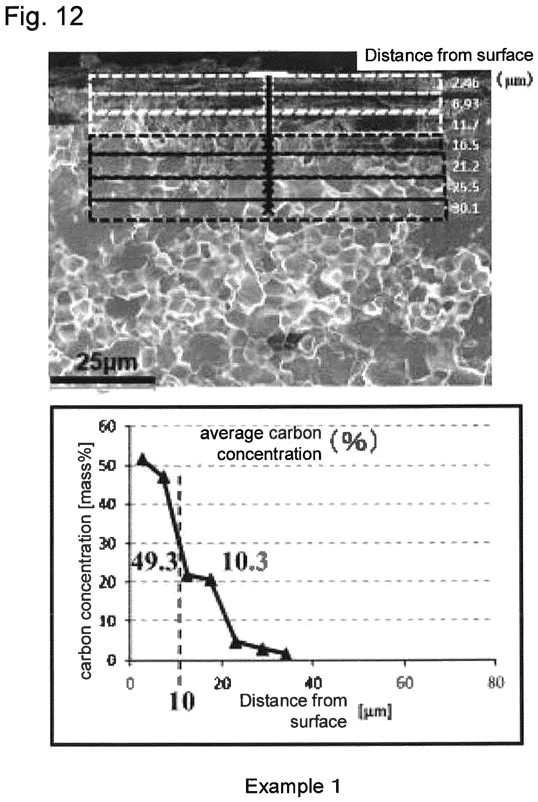

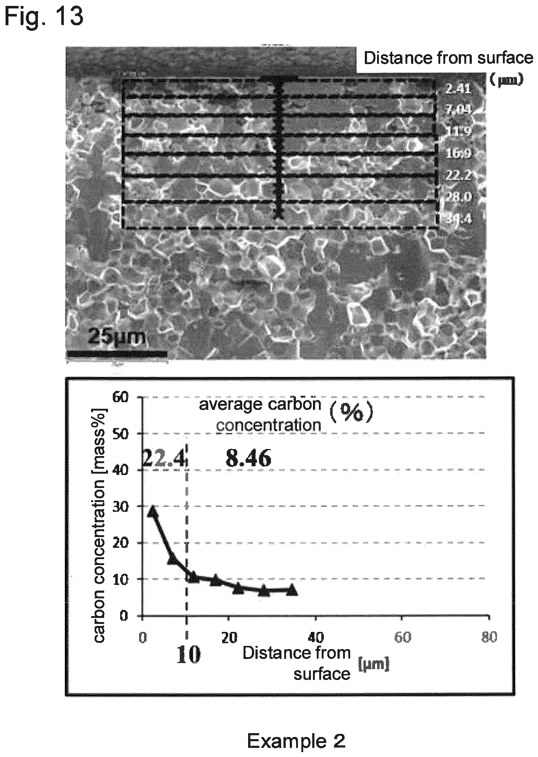

The results are shown in Figs. 9 to 13. Fig. 9 is the results of Comparative Example 1, Fig. 10 is the results of Comparative Example 2, Fig. 11 is the results of Comparative Example 3, Fig. 12 is the results of Example 1, and Fig. 13 is the results of Example 2.

According to Fig. 9, the average carbon concentration of the vicinity of the surface was 8.92% and the average carbon concentration of the inside was 6.15% in Comparative Example 1. According to Fig. 10, the average carbon concentration of the vicinity of the surface was 3.62% and the average carbon concentration of the inside was 2.55% in Comparative Example 2. As described above, there was no large difference between the average carbon concentrations in the vicinity of the surface and the inside in each of Comparative Examples 1 and 2. In contrast, according to Fig. 11, the average carbon concentration of the vicinity of the surface was 9.67% and the average carbon concentration of the inside was 3.08% in Comparative Example 3. It could be confirmed that a carbon element was enriched in the vicinity of the surface since the average carbon concentration of the vicinity of the surface was higher than the average carbon concentration of the inside as described above in Comparative Example 3. The difference was however still small compared to Examples 1 and 2 described later.

In contrast, it was found from Figs. 12 and 13 that there was a large difference between the average carbon concentrations in the vicinity of the surface and the inside, and the average carbon concentration of an area closer to the surface was higher in each of Examples 1 and 2. Specifically, in Example 1, the average carbon concentration of the vicinity of the surface was 49.3%, and the average carbon concentration of the inside was 10.3%; and in Example 2, the average carbon concentration of the vicinity of the surface was 22.4%, and the average carbon concentration of the inside was 8.46%. From these results, the black areas observed in the SEM images are believed to be areas showing that carbon was enriched, and in view of the prior results, this carbon is believed to be derived from Li₂CO₃. It is also believed that the average carbon concentration of the vicinity of the surface of at least 10%, which is preferably at least 20%, brings about excellent short circuit suppression.

### (Speculation)

From the foregoing results, it was found that the vicinity of the surface of the garnet-type solid electrolyte separator is tissue rich in carbon derived from Li₂CO₃. It is known that a brittle material like ceramics is fractured by development of a crack starting from micro recesses or cracks on the surface thereof. It is therefore believed that defects such as voids and cracks generated in sintering are exposed to the fractured face in the vicinity of the surface. It is believed that in Example 1, ethanol permeated defect parts in the surface treatment, and the heating process led to the reaction of the ethanol and the garnet-type solid electrolyte to form Li₂CO₃ since much of Li₂CO₃ distributed in such defects (Fig. 8).

It is believed that since Li₂CO₃ has extremely low wettability in lithium metal, lithium carbonate covering defect parts prevented lithium dendrites from developing, to improve short circuit suppression (Table 1).

## Claims

1. A garnet-type solid electrolyte separator comprising:
a garnet-type solid electrolyte;
a carbon-enriched layer present on at least one surface of the garnet-type solid electrolyte separator; and
a carbon-enriched part present in a portion defined by the surface and a depth of 10 µm.

2. The garnet-type solid electrolyte separator according to claim 1, wherein
the garnet-type solid electrolyte is (Li₇-3_{Y-Z}, Al_{Y})(La₃)(Zr_{2-Z}, M_{Z})O₁₂ where M is at least one element selected from the group consisting of Nb and Ta, and Y and Z are any numbers within ranges of 0 ≤ Y < 0.22 and 0 ≤ Z ≤ 2 respectively.

3. The garnet-type solid electrolyte separator according to claim 1 or 2, wherein there is a peak of Li₂CO₃ in an XPS spectrum of the surface.

4. The garnet-type solid electrolyte separator according to any one of claims 1 to 3, wherein
in a composition of the surface calculated by EDX, a carbon concentration is at least 6.8 mass%.

5. The garnet-type solid electrolyte separator according to any one of claims 1 to 4, wherein
in a composition of the surface calculated by EDX, a ratio of carbon/oxygen is at least 0.17, and a ratio of carbon/zirconium is at least 0.23, on a mass basis.

6. The garnet-type solid electrolyte separator according to any one of claims 1 to 5, wherein
in a composition of a fractured face when the garnet-type solid electrolyte separator is fractured in a thickness direction so that the carbon-enriched part is exposed, the composition being calculated by EDX, an average carbon concentration of an area defined by the surface and a depth of 10 µm is at least 10 mass%.

7. The garnet-type solid electrolyte separator according to claim 6, wherein the average carbon concentration is at least 20 mass%.

8. A method (10) of producing a garnet-type solid electrolyte separator, the method comprising:
a solvent touching step (S1) of touching a solvent containing an oxygen element with a surface of a garnet-type solid electrolyte sintered body; and
a heating step (S2) of, after the solvent touching step, heating the surface at a temperature not lower than a temperature at which a carbon-enriched layer is formed.

9. The method (10) of producing a garnet-type solid electrolyte separator according to claim 8, wherein the solvent is an alcohol.

10. The method (10) of producing a garnet-type solid electrolyte separator according to claim 8 or 9, wherein
in the heating step (S2), the surface is heated at a temperature of at least 450°C and lower than 700°C.
